# EUROPEAN PATENT APPLICATION

(11) **EP 2 600 623 A1**
(43) Date of publication of application: **05.06.2013**
(21) Application number: 11811961.9
(22) Date of filing: 02.05.2011
(51) Int. Cl.: H04N 13/02

(54) **OUTPUT DEVICE FOR VIDEO DATA**

(30) Priority: 27.07.2010 JP 2010167979
(71) Applicant: Panasonic Corporation, Osaka 571-8501 (JP)
(72) Inventor: SATO, Masafumi, Osaka 540-6207 (JP)
(74) Representative: Eisenführ, Speiser & Partner
(86) International application number: PCT/JP2011/002538
(87) International publication number: WO 2012/014354

(57) **Abstract**

An output device for video data includes a controller that can obtain two kinds of video data including 3D data and 2D data, and an HDMI that can selectively output video data obtained by the obtaining unit to an external device. When a type of the video data to be output is changed in a case of output of second video data after first video data, the HDMI outputs preset video data for a predetermined period after the output of the first video data, and then starts to output the second video data.

## Description

### Technical Field

The present invention relates to an output device for outputting video data to an external device.

### Background Art

Patent Document 1 discloses a camera. This camera adds control information for discriminating images between 2D (planar) images and 3D (stereoscopic) images to the images and stores the images in a storage unit. When this camera reads the images from the storage unit to output them to a television, it outputs the control information added to the images as control signals.

As a result, the television determines whether the images to be output are 2D images or 3D images according to the control signals, so as to be capable of displaying the images suitably in a display method according to types of the images.

### Prior Art Document

### Patent Document

Patent Document 1: JP-A-2008-42645

### Summary of Invention

### Problems to be Solved by the Invention

Conventionally, when the television receives the control signals, it analyzes contents of the control signals and determines whether types of images to be output are 2D images or 3D images. When the determined types of the image are the same, the images are displayed according to the same display method. On the other hand, when the determined types of the images are different, for example, in a case where output of one image is completed and output of another image is started and the type of image is changed from a 2D image into a 3D image, a television switches the display method from a display method for the 2D image into a display method for the 3D image. It takes a predetermined time for the television to receive the control signal and complete the switching of the display method because it analyzes a content of the control signal and switches the display method. As a result, video data after the switching that are received for the predetermined time are displayed in the display method corresponding to video data before the switching. Therefore, an abnormal image such that a user cannot recognize what is displayed is displayed on an external device.

It is an object of the present invention to provide an output device for video data that is capable of outputting a 3D image and a 2D image to an external device, and reducing display of an abnormal image on an external device for a period where the external device receives a control signal and completes switching of an image display method.

### Means for Solving the Problem

To solve the above problem, an output device for video data according to the invention, includes, an obtaining unit that can obtain two kinds of video data including 3D data and 2D data, and an output unit that can selectively output video data obtained by the obtaining unit to an external device. When a type of the video data to be output is changed in a case of output of second video data after first video data, the output unit outputs preset video data for a predetermined period after the output of the first video data, and then starts to output the second video data.

### Effects of the Invention

According to the present invention, when second video data is output after output of first video data and at that time a type of the video data to be output is changed, preset video data is output for a predetermined period after the output of the first video data, and then the output of the second video data is started. That is to say, since the preset video data is displayed at least for the predetermined period, a period for which an abnormal image is displayed is reduced.

### Brief Description of Drawings

Fig. 1 is a perspective view illustrating a 3D conversion lens attached to a digital video camera.
Fig. 2 is a diagram for describing image data captured by the digital video camera to which the 3D conversion lens is attached.
Fig. 3 is illustrating a block diagram illustrating a configuration of the digital video camera.
Figs. 4A and 4B are diagrams for describing a reason to output video data indicating a black screen when a type of video data to be output to a television is changed.
Fig. 5 is a flowchart for describing an operation for recording the video data.
Fig. 6 is a diagram for describing a management table of the video data.
Figs. 7A and 7B are diagrams illustrating a format of a compressed video data to be recorded.
Fig. 8 is a flowchart for describing a reproducing operation for reproducing video data in one file.
Figs. 9A and 9B are diagrams illustrating a format of the video data to be output to an external device.
Fig. 10 is a flowchart for describing the reproducing operation for sequentially reproducing video data in a plurality of files.
Figs. 11A and 11B are diagrams for describing a format of video data representing a black screen to be output to the external device.

### Mode for Carrying Out the Invention

### 1. First Embodiment

A first embodiment where the present invention is applied to a digital video camera will be described with reference to the drawings.

### 1-1. Outline

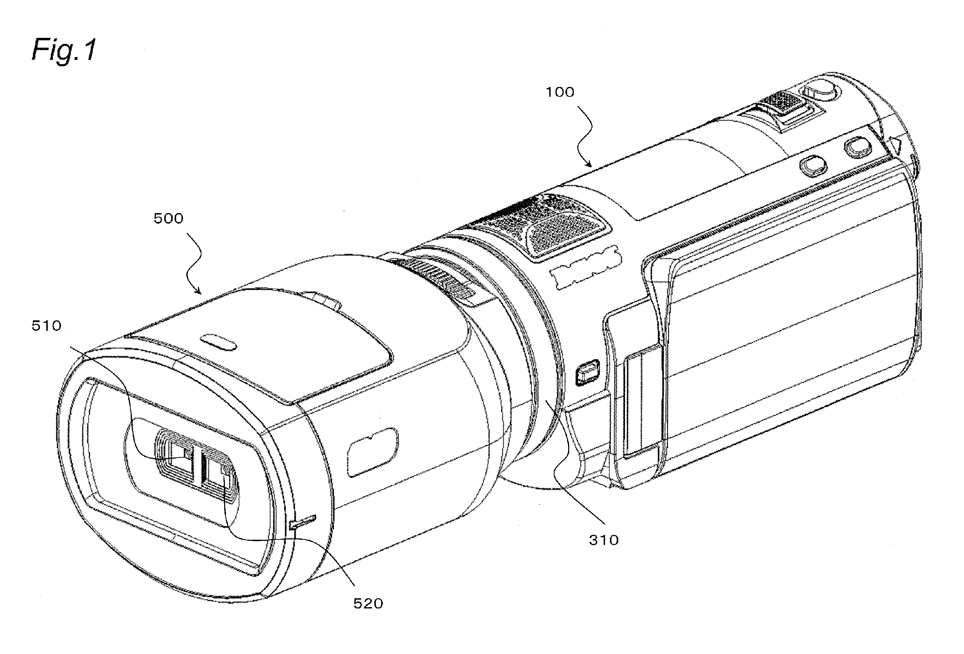

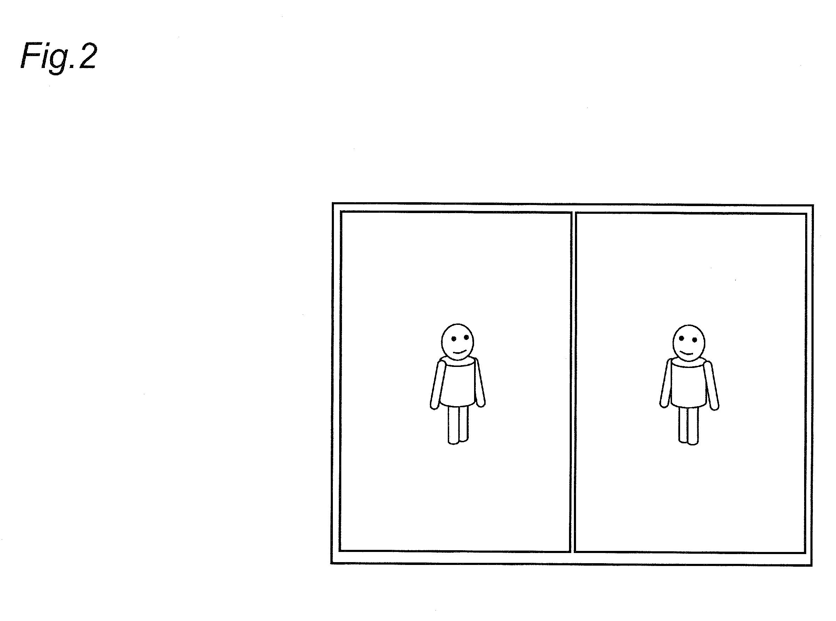

An outline of a digital video camera 100 according to the embodiment will be described with reference to Figs. 1 and 2. Fig. 1 is a perspective view illustrating a state that a 3D conversion lens 500 is attached to the digital video camera 100. Fig. 2 is a diagram for describing image data captured by the digital video camera 100 to which the 3D conversion lens 500 is attached.

The digital video camera 100 has a manual ring 310 for attaching the 3D conversion lens 500. The manual ring 310 has an internal thread inside. On the other hand, the 3D conversion lens 500 has an external thread with which the internal thread of the manual ring 310 is engaged. A user can engage the external thread of the 3D conversion lens 500 with the internal thread of the manual ring 310 to attach the 3D conversion lens 500 to the digital video camera 100. The digital video camera 100 can magnetically detect the attachment of the 3D conversion lens 500.

The 3D conversion lens 500 has a left-eye lens 520 for introducing light for forming a left-eye image in a 3D image into an optical system of the digital video camera 100, and a right-eye lens 510 for introducing light for forming a right-eye image into the optical system. The lights incident via the 3D conversion lens 500 are imaged as a 3D image of a side-by-side format shown in Fig. 2 by a CCD image sensor 180 of the digital video camera 100.

The digital video camera 100 captures a 3D image shown in Fig. 2, and can record it in a recording medium such as a memory card 240. On the other hand, in a state that the 3D conversion lens 500 is not attached, the digital video camera 100 images a 2D image, and can record data of the captured 2D image in a recording medium such as a memory card. Video data generated based on the 3D image shown in Fig. 2 is called 3D data. Further, video data generated based on a 2D image is called 2D data.

The digital video camera 100 can output 3D data and 2D data recorded in the recording medium such as the memory card via HDMI to an external device (for example, a television).

### 1-2. Configuration

### 1-2-1. Electrical Configuration

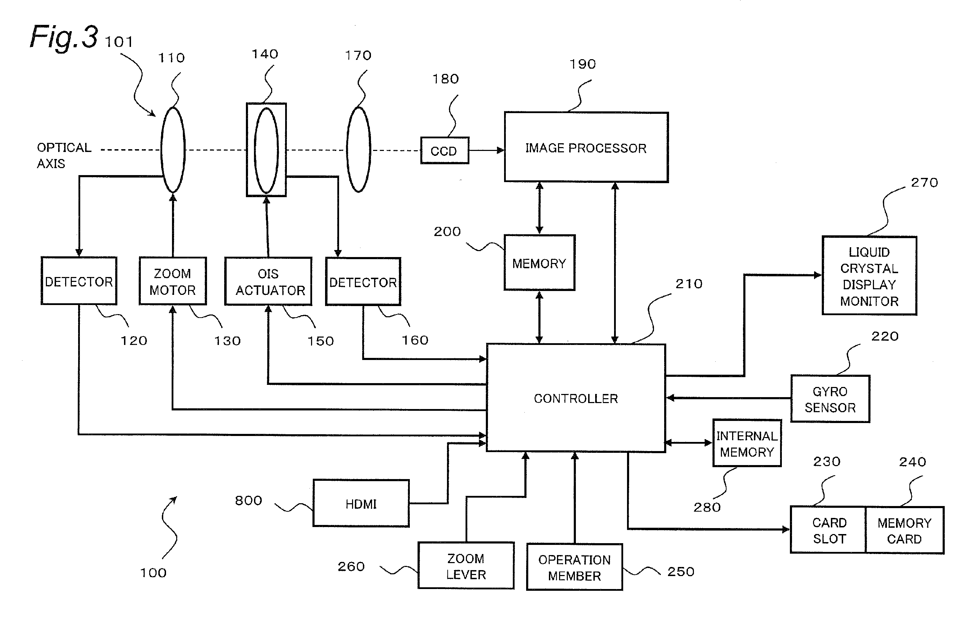

An electrical configuration of the digital video camera 100 according to the embodiment will be described with reference to Fig. 3. Fig. 3 is a block diagram illustrating a configuration of the digital video camera 100. The digital video camera 100 has an optical system 101, the CCD image sensor 180, an image processor 190, a liquid crystal display monitor 270, a detector 120, a zoom motor 130, an OIS actuator 150, the detector 160, a memory 200, a zoom lever 260, an operation member 250, an internal memory 280, a gyro sensor 220, a controller 210, an HDMI section 290, and a card slot 230. In the digital video camera 100, the CCD image sensor 180 captures a subject image formed by the optical system 101. Video data generated by the CCD image sensor 180 is subject to various processes in the image processor 190, and is stored in the memory card 240. Further, the video data stored in the memory card 240 can be displayed on the liquid crystal display monitor 270.

The optical system 101 of the digital video camera 100 includes a zoom lens 110, an OIS 140, and a focus lens 170. The zoom lens 110 moves along an optical axis of the optical system 101 to be capable of enlarging or reducing a subject image. The focus lens 170 moves along the optical axis of the optical system 101 to adjust a focus of the subject image.

The OIS 140 has a correcting lens that can move in a plane vertical to the optical axis inside. The OIS 140 drives the correcting lens to a direction where a shake of the digital video camera 100 is cancelled to reduce a shake of a subject image.

The zoom motor 130 drives the zoom lens 110. The zoom motor 130 may be realized by a pulse motor, a DC motor, a linear motor, a servo motor or the like. The zoom motor 130 may drive the zoom lens 110 via a cam mechanism or a mechanism such as a ball screw. The detector 120 detects a position on the optical axis where the zoom lens 110 is present. The detector 120 outputs a signal relating to the position of the zoom lens through a switch such as a brush according to the transfer of the zoom lens 110 to an optically axial direction.

The OIS actuator 150 drives the correcting lens in the OIS 140 in a plane vertical to the optical axis. The OIS actuator 150 can be realized by a planar coil or an ultrasonic motor. The detector 160 detects a moving distance of the correcting lens in the OIS 140.

The CCD image sensor 180 captures a subject image formed by the optical system 101 composed of the zoom lens 110 to generate video data. The CCD image sensor 180 performs various operations such as exposure, transfer and an electronic shutter.

The image processor 190 executes the various processes on video data generated by the CCD image sensor 180 to generate video data to be displayed on the liquid crystal display monitor 270 or generate video data to be again stored in the memory card 240. For example, the image processor 190 executes various processes such as gamma correction, white balance correction and a scratch correction on the video data generated by the CCD image sensor 180. Further, the image processor 190 compresses the video data generated by the CCD image sensor 180 according to a compressing format in conformity with the H.264 standards or the MPEG2 standards. The image processor 190 decodes the compressed video data. The image processor 190 can be realized by a DSP or a microcomputer.

The controller 210 is a control unit for controlling the digital video camera 100 entirely. The controller 210 can be realized by a semiconductor element. The controller 210 may be composed of only hardware or a combination of hardware and software. The controller 210 can be realized by a microcomputer.

The memory 200 functions as a work memory of the image processor 190 and the controller 210. The memory 200 can be realized by, for example, a DRAM or a ferroelectric memory.

The liquid crystal display monitor 270 can display video represented by video data generated by the CCD image sensor 180 and video represented by video data read from the memory card 240.

The gyro sensor 220 is composed of an oscillation material such as a piezoelectric element. The gyro sensor 220 converts a force caused by a Coriolis force at a time of oscillating the oscillation material such as the piezoelectric element at a constant frequency into a voltage to obtain angular velocity information. The digital video camera 100 obtains the angular velocity information from the gyro sensor 220 and drives the correcting lens in the OIS to a direction where the shake is cancelled to correct a camera shake caused by the user.

The memory card 240 is attachable to the card slot 230. The card slot 230 can be mechanically and electrically connected to the memory card 240. The memory card 240 contains a flash memory or a ferroelectric memory to be capable of storing data.

The internal memory 280 is composed of a flash memory or a ferroelectric memory. The internal memory 280 stores a control program or the like for entirely controlling the digital video camera 100.

The operation member 250 is a member for receiving operations from the user. The zoom lever 260 is a member for receiving an instruction for changing a zoom magnification from the user.

The HDMI section 290 is an interface for outputting data such as video data to the external device according to the HDMI (High Definition Multimedia Interface) standards. The digital video camera 100 can output video data to the external device via the HDMI section 290.

### 1-2-2. Correspondence to the Present Invention

The HDMI section 290 is one example of an output unit. The controller 210 is one example of an obtaining unit.

### 1-2-3. Conventional Problem, and Outline of the Digital Video Camera according to the Embodiment

In a television that can display 3D videos, the display method is different between a case where a 3D video is displayed based on 3D data and a case where a 2D video is displayed based on 2D data. Concretely, in the television, for example, when a 3D video method is a side-by-side method and a 3D video is displayed, a left-eye image and a right-eye image are enlarged to a horizontal direction and both the enlarged images are alternately displayed. On the other hand, when a 2D video is displayed, the television does not particularly enlarge images and displays the images directly.

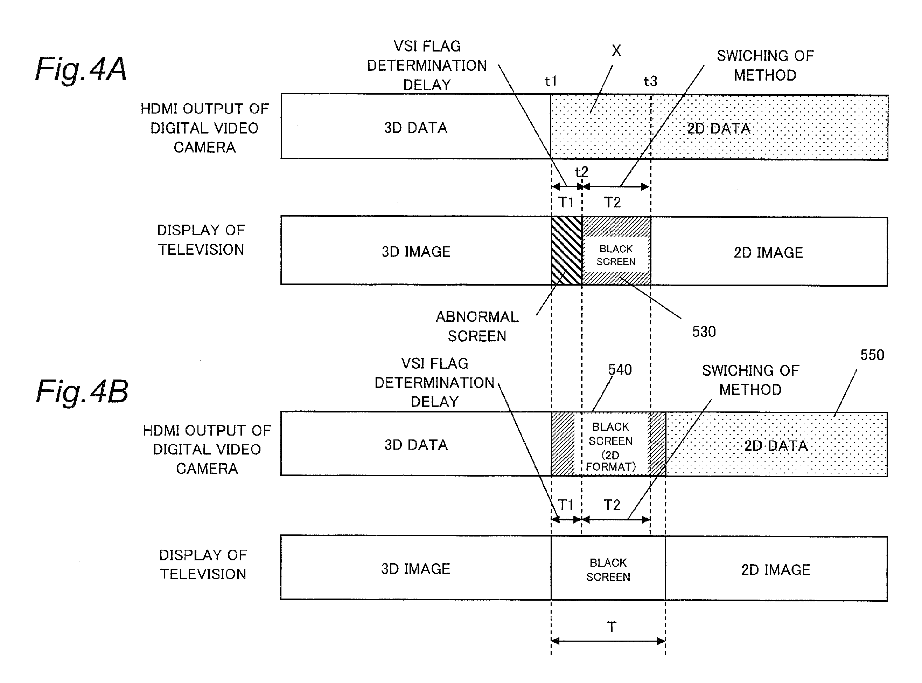

Fig. 4A is a diagram for describing HDMI output of the digital video camera and screen display of the television at a time when a type of video data to be output from the digital video camera to the television is changed from 3D data into 2D data in a conventional method. When completing the output of 3D data, the digital video camera starts to output 2D data. The television determines whether receiving video data is 2D data or 3D data according to whether the receiving video data includes a VSI flag. The VSI flag is for determining whether the video data to be output from the digital video camera to the television is 3D data or 2D data, and is included only in 3D data output from the digital video camera to television and is output for each frame. When the VSI flag is continuously present in the video data for a predetermined frame or more (for example, 3 or more frames), the television determines that the receiving video data is 3D data. When not so, the television determines that the receiving video data is 2D data. A condition for determining whether the VSI flag is continuously present for the predetermined frames or more (for example, 3 or more frames) improves determination reliability because the VSI flag cannot be detected in some cases due to an error. When the determination is made based on the VSI flag whether the receiving video data is any one of 2D data and 3D data, the television sets the display method of the television into a 2D method or a 3D method based on the determined result. For example, when video data output from the digital video camera is switched from 3D data into 2D data, the television recognizes that the video data is switched from the 3D data into the 2D data based on non-presence of the VSI flag in the received video data.
However, the condition for determining whether the VSI flag is continuously present for the predetermined frames or more (for example, 3 or more frames) causes a problem such that the switching of video data cannot be recognized until at least predetermined frames pass after the video data is switched. Further, it takes a predetermined time to analyze whether the VSI flag is present in each frame. Accordingly, when video data to be received is switched from 3D data into 2D data, the television cannot immediately determine the switching. That is to say, the television cannot determine the switching of video data from 3D data into 2D data simultaneously with the switching. Hereinafter, this is described as "VSI flag determination delay". As a result, although receiving 2D data as video data at time t1, the television displays 2D data in the display method for 3D video because 3D data is regarded to be received until the determination is made based on non-presence of the VSI flag that the receiving video data is 2D data. That is to say, the television displays an abnormal screen for this period (t1 to t2. Hereinafter, "VSI flag determination delay period T1"). For example, when the 3D video method is the side-by-side method, the television divides 2D video right and left, and enlarges a right half image and a left half image to the horizontal direction respectively to display the enlarged images in a temporary alternate manner. For this reason, a viewer visually recognizes an image obtained by overlapping the right half image and the left half image, and recognizes it as an abnormal image where contents of video cannot be understood.

When the television determines that the VSI flag is not present in the received video data (time t2), it displays a black screen 530 for a predetermined period T2 (t2 to t3, hereinafter, "display method switching period T2") in order to switch the display method. When the switching into the display method of 2D video is completed, the television starts to display the 2D video based on the received 2D data. In this case, at the VSI flag determination delay period T1 and for the display method switching period T2, a head portion x of the 2D data received from the digital video camera is not displayed on the screen of the television.

In order to solve the above problem, in the digital video camera 100 according to the embodiment, when the type of video data is switched and output of video data reproduced before the switching is completed at that time, video data representing a black screen is output until a predetermined period passes from the completion of the output of the reproducing video data, and output of video data of new video to the television is started after the predetermined period passes.

Fig. 4B is a diagram for describing HDMI output of the digital video camera 100 and the screen display of the television at a time when the type of video data to be output from the digital video camera 100 to the television is changed from 3D data into 2D data in this embodiment. As shown in Fig. 4B, the digital video camera 100 outputs 2D data 540 representing a black screen for a predetermined period T after the completion of the output of 3D data, and thereafter starts the output of 2D data 550 as video contents. The predetermined period T is set to be longer than a period necessary to complete the determination of the VSI flag of the video data and the switching of the type of the display method after receiving the input of video data of which type is different from video data displayed previously by the television (in Fig. 4A, a total period of the VSI flag determination delay period T1 and the display method switching period T2). The predetermined period T is set to be longer than the total period of the VSI flag determination delay period T1 and the display method switching period T2 because of adaptability with a case where the time required for the determination and the switching of the display method slightly disperses.

In such a configuration, the television displays the 2D data representing the black screen received from the digital video camera 100 on the screen of the television in the display method for 3D video for the VSI flag determination delay period T1. Even if the 2D data representing the black screen is displayed on the screen of the television in the display method for 3D video (for example, a side-by-side method or a top-and-bottom method), only the black screen is displayed on the television. As a result, the user does not recognize the black screen displayed on the television as the abnormal screen for the VSI flag determination delay period T1. The output control of video data in this embodiment will be described in detail below.

### 1-3. Operation

### 1-3-1. Recording Operation

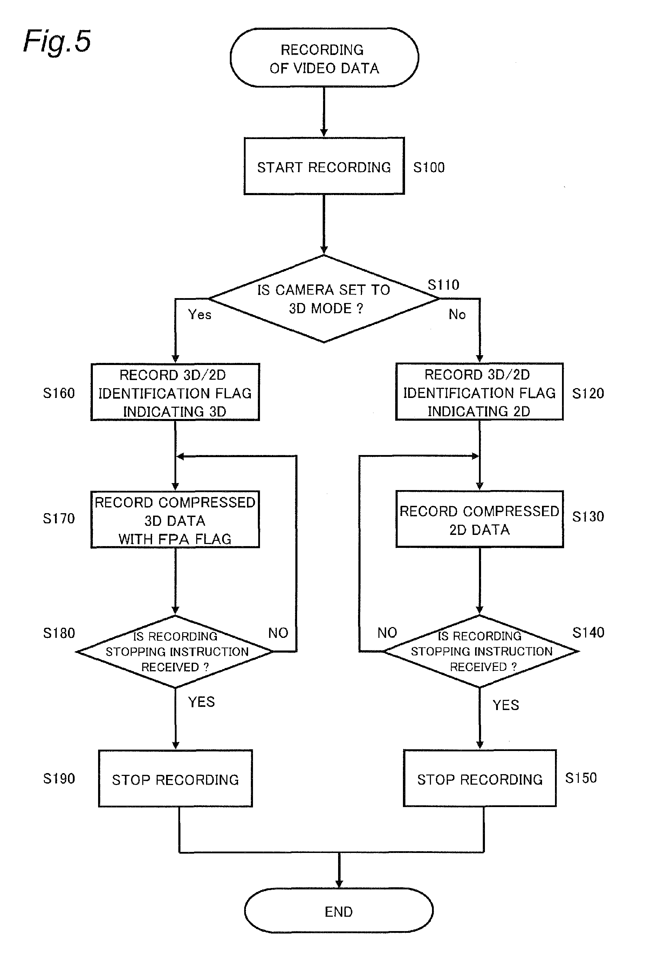

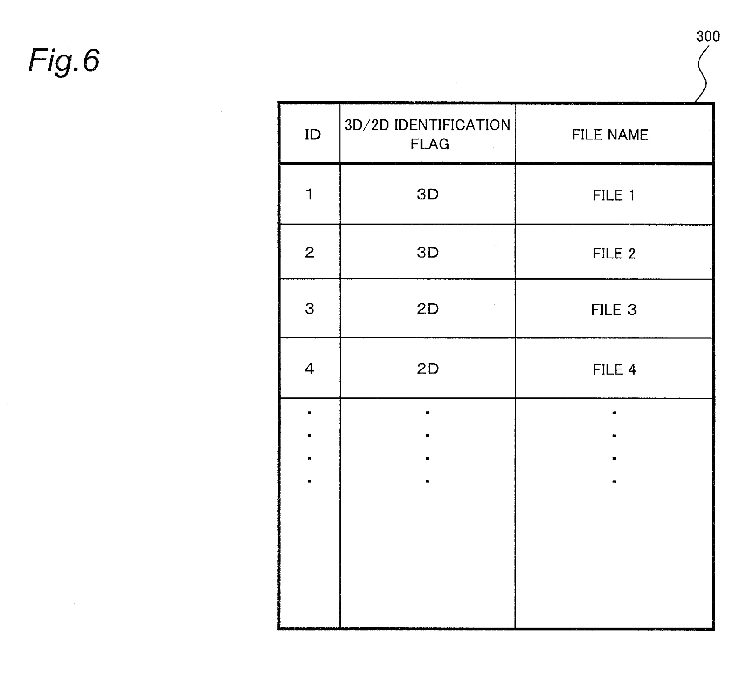

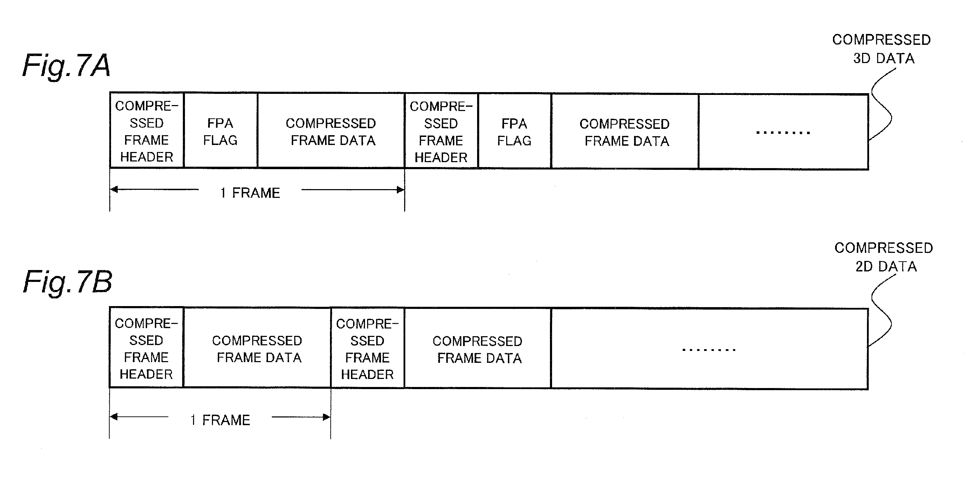

The recording operation for video data in the digital video camera 100 will be described with reference to Figs. 5 to 7A-7B. Fig. 5 is a flowchart for describing the recording operation for video data. Fig. 6 is a diagram for describing a management table of video data. Figs. 7A-7B are diagrams illustrating a format of compressed video data to be recorded. Fig. 7A illustrates a format of 3D data, and Fig. 7B illustrates a format of 2D data.

In Fig. 5, when receiving an operation from the user, the digital video camera 100 starts to record video data (S100) . When the recording of the video data is started, the controller 210 determines whether the self device (the digital video camera 100) is set into a 3D mode (S110) . Concretely, the controller 210 determines whether the 3D conversion lens 500 is attached to the digital video camera 100.

When the determination is made that the 3D mode is not set (namely, the 3D conversion lens 500 is not attached to the digital video camera 100), the controller 210 records information representing that video data to be recorded is 2D data into the management table 300 (S120) . The management table 300, as shown in Fig. 6, manages IDs, information representing that video data are 2D data or 3D data (hereinafter, "3D/2D identification flag"), and file names of video data with them being related to each other. The management table 300 is recorded in the memory card 240. When the power of the digital video camera 100 is ON, the management table 300 is read from the memory card 240, and is temporarily stored in the internal memory 280. When the recording of video data in the memory card 240 is completed, the controller 210 updates the management table 300 in the internal memory 280, and updates the management table 300 recorded in the memory card 240.

When the 3D/2D identification flag indicating that video data to be recorded is 2D data is recorded in the management table 300, the controller 210 starts to record 2D video data into the memory card 240 (S130). Concretely, the controller 210 compresses the video data in a predetermined method to generate compressed 2D data shown in Fig. 7B and records it in the memory card 240. As to the compressed 2D data, a compressed frame header and compressed frame data are stored for each frame. The compressed frame header stores, for example, information representing that the type of next compressed frame data is I picture, P picture or B picture.

When the recording of video data into the memory card 240 is started, the controller 210 determines whether an instruction for stopping the recording of the video data is received from the user via the operation member 250 (S140) . Whereas the controller 210 continues the recording of the video data into the memory card 240 until receiving the recording stopping instruction, when receiving the recording stopping instruction, the controller 210 stops the recording of the video data into the memory card 240 (S150).

On the other hand, when the determination is made at step S110 that the 3D mode is set (namely, the determination is made that the 3D conversion lens 500 is attached to the self device), the controller 210 records the 3D/2D identification flag indicating that the video data to be recorded is 3D data into the management table 300 (S160). When the 3D/2D identification flag is recorded into the management table 300, the controller 210 starts to record 3D video data into the memory card 240 (S170) . Concretely, the controller 210 compresses the video data according to a predetermined method to generate compressed 3D data shown in Fig. 7A and record it into the memory card 240. The compressed 3D data includes a compressed frame header, an FPA flag, and compressed frame data for each frame. The FPA flag is a flag indicating that compressed frame data is 3D data. The FPA flag is stored in a Frame Packing Arrangement SEI region defined by the H.264 standards.

When the recording of video data into the memory card 240 is started, the controller 210 determines whether the instruction for stopping the recording of the video data is received from the user (S180). Whereas the controller 210 continues the recording until receiving the recording stopping instruction, it stops the recording of the video data upon receiving the recording stopping instruction (S190).

### 1-3-2. Operation for Reproducing Video Data

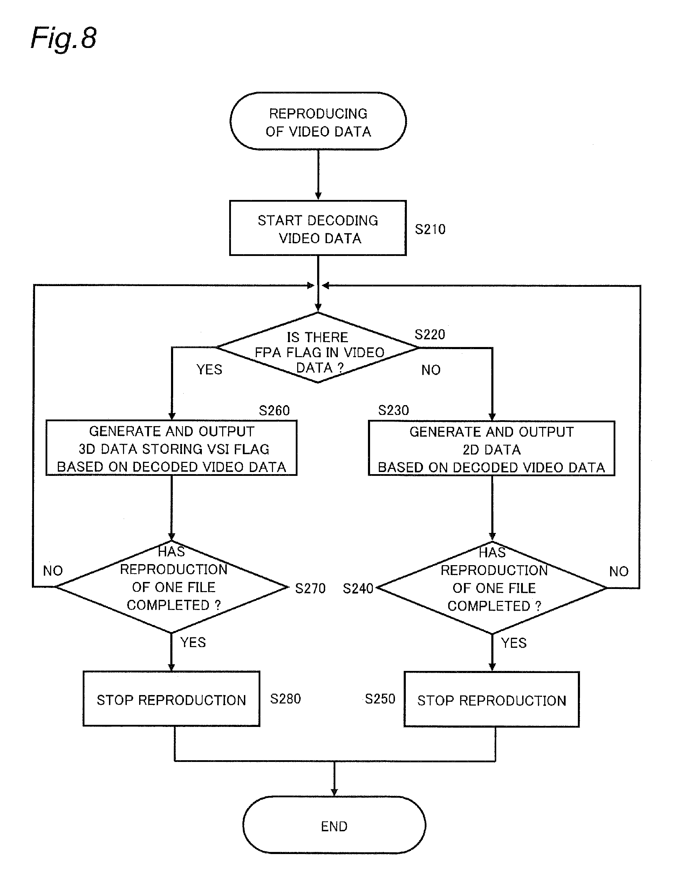

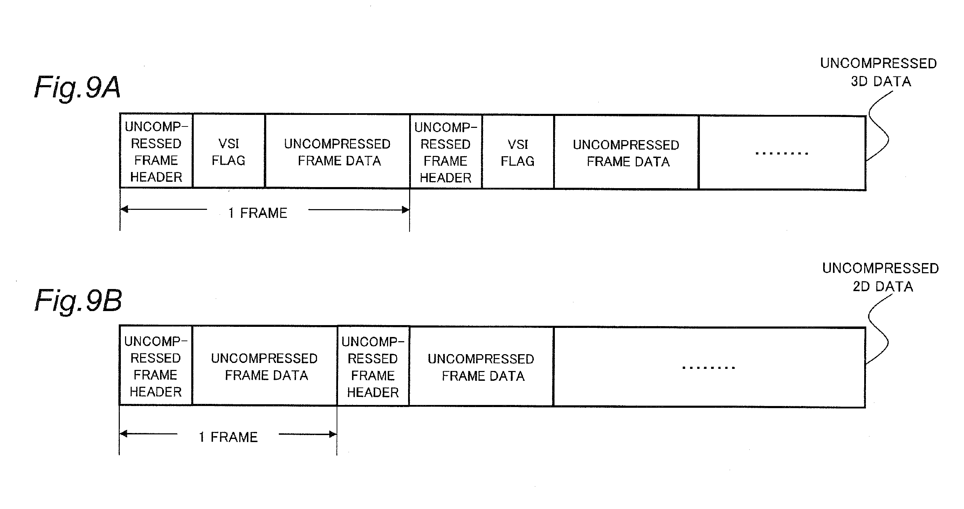

An operation for reproducing video data in the digital video camera 100 in a case where the digital video camera 100 outputs the video data to the external device with it being connected to an external device via the HDMI section 290 will be described with reference to Figs. 8 and 9. Fig. 8 is a flowchart for describing the operation for reproducing video data. An example of Fig. 8 shows a case where video data in one file is reproduced. Fig. 9 is a diagram illustrating a format of video data to be output to the external device. Fig. 9A is a diagram illustrating a format of uncompressed 3D data. Fig. 9B is a diagram illustrating a format of uncompressed 2D data. In this embodiment, a television is considered as the external device. In this embodiment, the reproduction of video data includes a process for decoding video data, a process for analyzing whether the decoded video data includes the FPA flag and so on, and a process for generating and outputting 2D data or 3D data based on the decoded and analyzed video data.

When video data to be output to the television is reproduced, the controller 210 controls the image processor 190 to start to decode the compressed video data to be reproduced (S210) . When the image processor 190 is controlled so that the video data is started to be decoded, the controller 210 determines whether the decoded video data stores the FPA flag (S220).

When the determination is made that the FPA flag is not included, namely, the video data is 2D data, the controller 210 generates uncompressed 2D data based on the decoded video data to output it via the HDMI section 290 (S230). The uncompressed 2D data, as shown in Fig. 9B, includes an uncompressed frame header and uncompressed frame data in each frame. The uncompressed frame header stores information relating to resolution of the uncompressed frame data, for example. The controller 210 continues to generate and output uncompressed 2D data until the reproduction of video data in one file (1 ID) is completed (S240) . When the reproduction of the video data is completed, the controller 210 stops the reproduction of the video data (S250).

On the other hand, when the determination is made at step S220 that the FPA flag is included, namely, the video data is 3D data, the controller 210 generates uncompressed 3D data based on the decoded video data (S260). The uncompressed 3D data, as shown in Fig. 9A, includes the uncompressed frame header, the VSI flag, and the uncompressed frame data in each frame. The VSI flag is a flag for indicating that the uncompressed frame data is 3D data. The VSI flag is stored in an HDMI Vendor Specific InfoFrame region defined by the HDMI standards. The generation and output of the uncompressed 3D data are continued until the reproduction of video data in one file (1 ID) is completed (S270) . When the reproduction of the video data is completed, the controller 210 stops the reproduction of the video data (S280).

### 1-3-3. Operation for outputting Video Data to Television

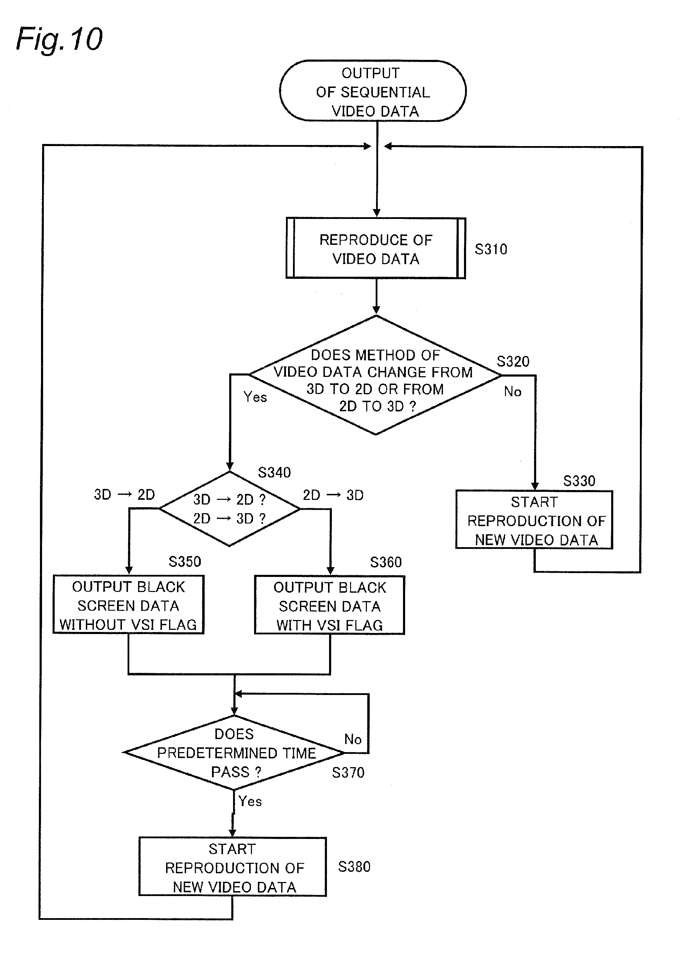

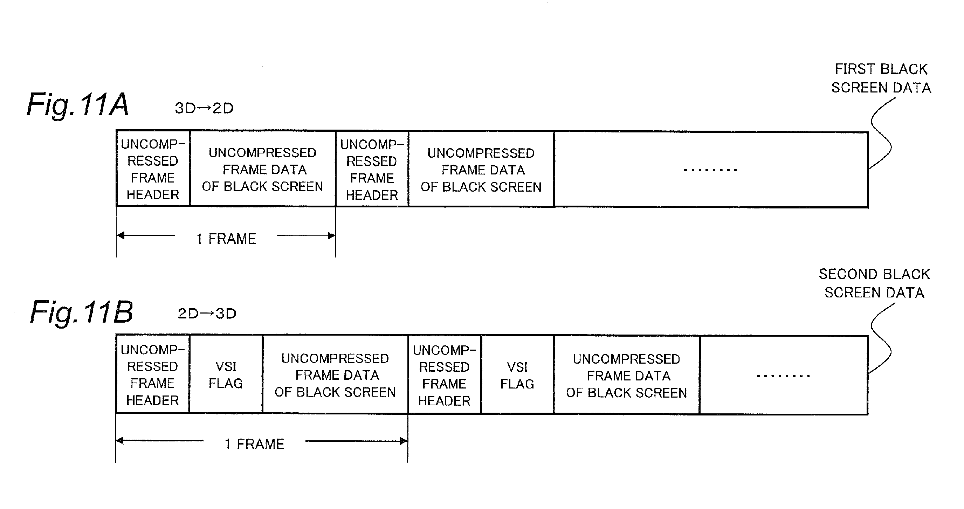

When a plurality of video data is stored in the memory card 240, the controller 210 sequentially reproduces the video data in the order where IDs are recorded in the management table 300. An operation for outputting sequentially reproduced video data to the television in the digital video camera 100 will be described below with reference to Figs. 10 and 11. Fig. 10 is a flowchart for describing the reproducing operation in a case where video data in the plurality of files are sequentially reproduced and output. Fig. 11 is a diagram for describing a format of video data representing the black screen to be output to the television.

The controller 210 reproduces the video data until the completion of the reproduction of video data in a single file (1 ID), and outputs the reproduced video data to the television (S310) . This concrete process is executed according to the flowchart in Fig. 8 described above. When the reproduction of the reproducing video data is completed, the controller 210 determines whether the type of the next video data to be reproduced is different from the type of the previously reproduced video data (S320). The type of video data is 3D data or 2D data, and the controller 210 determines whether the type of video data is changed from 3D data into 2D data or from 2D data into 3D data. Concretely, the controller 210 determines whether the content of the 3D/2D identification flag stored in the management table 300 is different between video data to be reproduced next and previously reproduced video data.

When the determination is made that the types of the both video data are same as each other, the controller 210 executes a reproduction starting process on new video data after the previous video data (S330), and reproduces the video data at step S310 to output it to the television.

On the other hand, when the determination is made that the types of both the video data are different from each other, the controller 210 determines whether the type of video data is changed from 3D data into 2D data or from 2D data into 3D data (S340).

When the determination is made that the type is changed from 3D data into 2D data, the controller 210 outputs black screen data of a 2D format (first black screen data) to the television before output of new 2D video data (S350). The first black screen data includes the uncompressed frame header and black screen uncompressed frame data in each frame as shown in Fig. 11A. The first black screen data does not include the VSI flag. That is to say, in the case of the change from 3D data into 2D data, the controller 210 outputs the black screen data of 2D format of which type is the same as that of the new video data to television.

On the other hand, when the determination is made that the type of video data is changed from 2D data into 3D data, the controller 210 outputs black screen data of 3D format (second black screen data) to the television before output of new 3D video data (S360). The second black screen data includes the uncompressed frame header, the VSI flag and the black screen uncompressed frame data in each frame as shown in Fig. 11B. That is to say, when the determination is made that the type of video data is changed from 2D data into 3D data, the controller 210 outputs the black screen data of 3D format of which type is the same as that of new video data to the television.

When the black screen data of 3D or 2D format is output to the television, the controller 210 continues to output the black screen data to the television for the predetermined period T (S370).

When the predetermined period T passes, the controller 210 executes the process for starting the reproduction of new video data (S380), the video data is reproduced at step S310 to be output to the television. Concretely, when the type of the new video data is 3D data, the video data of format shown in Fig. 9A is output, and when 2D data, the video data of format shown in Fig. 9B is output.

When the type of video data to be output to the television is changed, the digital video camera 100 according to the embodiment outputs the video data representing the black screen for the predetermined period T, and after the predetermined period T passes, it outputs new video data to the television. That is to say, when the type of video data to be output to the television is switched, the digital video camera 100 outputs video data preset after execution of the output of previous video data for the predetermined period T, and thereafter starts the output of the new video data. When the type of the received video data is changed from 3D data into 2D data, as shown in Fig. 4B, the television receives the 2D data 540 representing the black screen for the VSI flag determination delay period T1. In this case, at the VSI flag determination delay period T1, the television displays the 2D data representing the received black screen on the screen in the display method for 3D video. However, even when the 2D data shown in the black screen is displayed on the screen of the television in the display method for 3D video, it is displayed only as the black screen. As a result, the user does not recognize the black screen displayed on the television for the VSI flag determination delay period T1 as the abnormal screen.

After the VSI flag determination delay period T1 passes, the television displays the 2D data 540 representing the black screen output from the digital video camera 100 in the display method for 2D video until the predetermined period T passes, and thereafter displays the 2D data 550 as video contents.
When the television itself has a function for displaying the black screen 530 like the conventional example shown in Fig. 4A, the television itself displays the black screen 530 for the display method switching period T2 after the VSI flag determination delay period T1 passes. For example, as shown in Fig. 4B, when the predetermined period T does not yet pass at the passage of the display method switching period T2, the black screen output from the digital video camera 100 is displayed in the display method for 2D video until the predetermined period T passes, and thereafter the 2D data 550 is displayed as video contents.

When the type of the received video data is changed from 2D data into 3D data, the television receives 3D data representing the black screen at the VSI flag determination delay period T1. In this case, the television displays the received 3D data representing the black screen in the display method for 2D video at the VSI flag determination delay period. However, even when the 3D data representing the black screen is displayed on the screen of the television according to the display method for 2D video, it is displayed only as the black screen. As a result, the user does not recognize the black screen displayed on the television as an abnormal screen for the VSI flag determination delay period T1. After the VSI flag determination delay period passes, the television displays the 3D data representing the black screen output from the digital video camera 100 in the display method for 3D video until the predetermined period T passes, and thereafter displays the 3D data as video contents. When the television itself has the function for displaying the black screen 530 like the conventional example shown in Fig. 4A, the television itself displays the black screen 530 for the display method switching period T2 after the VSI flag determination delay period T1 passes. For example, as shown in Fig. 4B, when the predetermined period T does not yet pass at the passage of the display method switching period T2, the black screen output from the digital video camera 100 is displayed in the display method for 3D video until the predetermined period T passes, and thereafter the 3D data is displayed as video contents.

When the type of the video data to be output to the television is changed, the digital video camera 100 according to the embodiment outputs the video data representing the black screen for a longer period than the period for which the television receives the input of video data of which type is different from the type of previously displayed video data and completes the switching of the type of the display method of the video data, and thereafter outputs new video data. As a result, the television completes the switching of the display method of the video data while receiving the video data representing the black screen to be capable of displaying new video data from a head in a suitable method.

Further, the digital video camera 100 according to the embodiment outputs the video data representing the black screen as video data of which type is the same as the switched type of video data. As a result, the television can recognize the switched type of the video data to be received based on the received video data representing the black screen. As a result, the television can change the display method for video at a stage that the video data representing the black screen is received.

### 2. Other Embodiment

The first embodiment is described above as the embodiment of the present invention. However, the present invention is not limited to this. Other embodiments of the present invention will be described together in this column.

The optical system 101 and the driving system of the digital video camera 100 according to the first embodiment are not limited to those shown in Fig. 3. For example, Fig. 3 illustrates the optical system 101 having a three-group structure, but the lens structure may be one having another groups. Further, each of the lenses may be composed of one lens or may be composed of a lens group having a plurality of lenses.

In the first embodiment, illustrates the CCD image sensor 180 is described as the image pickup unit, but the present invention is not limited to this. For example, the image pickup unit may be composed of a CMOS image sensor or an NMOS image sensor.

In the first embodiment, video data are sequentially reproduced in the order of IDs in the management table 300, but the configuration does not always have to be this. For example, the user may select video data to be reproduced, and the video data may be reproduced sequentially in order of the selection.

In the first embodiment, video where a left-eye image and a right-eye image are stored in one frame (3D image of side-by-side format) is recorded as 3D data. However, the configuration does not always have to be this. For example, the present invention can be applied also to a form where a left-eye video and a right-eye video are stored as separate video data (for example, an MVC method defined by the H.264 standards). In the case of the MVC method, the determination can be made whether video data is 3D data not based on the FPA flag but based on whether both left-eye image and right-eye image are present in video data. In short, the present invention can be applied also to a case where the type of video data to be output to the external device is changed from 2D data into 3D data or changed in a reversed way.

In the first embodiment, video data is recorded and output in frame. However, the configuration does not always have to be this. For example, video data may be recorded and output in field.

In the first embodiment, when the type of video data to be output is changed, video data representing the black screen is output. However, the present invention does not always have to have such a configuration. For example, video data may represent a screen with single color such as purple or red. That is to say, the video data may be video data that represents the same video even when the video data is reproduced in the reproducing method for 2D data and the reproducing method for 3D data. In short, the video data may be video data representing a video that does not provide discomfort to the user, namely, video data that can be visually recognized similarly even when it is reproduced in the reproducing method for 2D data and the reproducing method for 3D data.

In the first embodiment, 3D data does not store a flag representing 3D such as the FPA flag or the VSI flag, and 2D data does not store a flag representing 2D. However, the present invention does not always have to have such a configuration. For example, 2D data may store the flag representing 2D and 3D data does not have to store the flag representing 3D.

The first embodiment describes an example of the digital video camera. However, the present invention is not always limited to such an example. The present invention can be applied also to digital still cameras, BD recorders, or mobile telephones. In short, the present invention can be applied to output devices for outputting 3D video data and 2D video data selectively to the external device.

In the first embodiment, the controller 210 determines at step S320 whether the content of the 3D/2D identification flag stored in the management table 300 is different between video data to be reproduced next and video data previously reproduced. However, the present invention does not always have to have such a configuration. For example, the determination may be made whether the stored state of the FPA flag in decoded video data is different between video data to be reproduced next and previously reproduced video data. In short, the determination may be made that the type of video data (3D data or 2D data) is different between video data to be reproduced next and previously reproduced video data.

In the first embodiment, the FPA flag and the VSI flag are present between the frame header and the frame data. However, the present invention does not always have to have such a configuration. For example, the FPA flag and the VSI flag may be present in frame data. In short, the configuration may be such that a relation among the FPA flag and the VSI flag and frame data can be identified.

In the first embodiment, a head of a frame has a frame header as the format of video data. However, the present invention is not limited to such a configuration. An identification signal that does not have a frame header and enables discrimination of division in frames may be additionally provided. In short, the configuration may be such that unit division of video data can be discriminated.

In the first embodiment, the FPA flag and the VSI flag correspond one-to-one with a frame, and thus they are given to each frame. However, the present invention does not always have to have such a configuration. The definition of the flags is valid until next flag appears, and the flag may be inserted only into each head of each video data or inserted at a GOP cycle.

In the first embodiment, when the type of video data to be output to the television is changed, the digital video camera 100 outputs the video data representing the black screen for the predetermined period T that is longer than the period for which the television receives the input of video data of which type is different from that of previously displayed video data and completes the switching of the type of the display method for video data. The predetermined period T is longer than the total period of the VSI flag determination delay period T1 and the display method switching period T2 as described above. However, when the television discriminates the VSI flag and outputs the black screen, the period for outputting the black screen from the digital video camera 100 may be the VSI flag determination delay period T1 (namely, the period where after the television receives the input of video data of which type is different from that of previously displayed video data, the television recognizes that the type of the video data is different from that of the previously displayed video data and starts to display the black screen). In this case, the black screen output from the digital video camera 100 is displayed on the television for the VSI flag determination delay period T1, and the black screen output from the television itself is displayed on the television after the VSI flag determination delay period T1. As a result, the display of the abnormal screen on the television is prevented. In order to be capable of coping with temporal dispersion in discrimination, this period may be slightly longer than the VSI flag determination delay period T1. Further, the period for outputting the black screen may be only the display method switching period T2 (namely, the period where the television starts to change the display method of video data and completes it). This is because the period where the television receives the input of video data of which type is different from that of previously displayed video data and starts to change the output method for video data is very short, and thus this period might be neglected in some cases. In order to be capable of coping with temporal dispersion in the switching of the display method, this period may be slightly longer than the display method switching period T2.

The first embodiment describes the case where video data (2D data and 3D data) recorded in the memory card 240 are continuously reproduced merely as an example. However, the idea of the present invention can be applied also to a case where video data is reproduced from another video source. For example, the idea of the present invention can be applied also to a case where a video source is a broadcast wave. The idea of the present invention can be applied also to a case where when a broadcast wave is received via a tuner or STB (set top box), the received broadcast wave includes 2D data and 3D data as video data, and the received video data is switched between 2D data 3D data. Further, the idea of the present invention can be applied also to a case where a video source is an optical disc. The idea of the present invention can be applied also to a case where when an optical disc includes 2D data and 3D data as the video data and the optical disc is reproduced by an optical disc reproducing device, reproduced video data is switched between 2D data and 3D data.

### Industrial Applicability

The present invention can be applied to output devices such as digital video cameras, digital still cameras, BD recorders, and mobile telephones.

### Description of Reference Characters

| | |
|---|---|
| 100 | digital video camera |
| 110 | zoom lens |
| 120 | detector |
| 130 | zoom motor |
| 140 | OIS |
| 150 | OIS actuator |
| 160 | detector |
| 170 | focus lens |
| 180 | CCD image sensor |
| 190 | image processor |
| 200 | memory |
| 210 | controller |
| 220 | gyro sensor |
| 230 | card slot |
| 240 | memory card |
| 250 | operation member |
| 260 | zoom lever |
| 270 | liquid crystal display monitor |
| 280 | internal memory |
| 290 | HDMI |
| 300 | management table |
| 310 | manual ring |
| 500 | 3D conversion lens |
| 510 | right-eye lens |
| 520 | left-eye lens |

## Claims

1. An output device for video data, comprising:
an obtaining unit that can obtain two types of video data including 3D data and 2D data; and
an output unit that can selectively output video data obtained by the obtaining unit to an external device,
wherein in a case of output of second video data after output of first video data, when a type of the video data to be output is changed, the output unit outputs preset video data for a predetermined period after the output of the first video data, and then starts to output the second video data.

2. The output device for video data according to claim 1, wherein the type of the preset video data is the same as that of the second video data.

3. The output device for video data according to claims 1 or 2, wherein the preset video data is video data representing same videos even in both a display method for 2D data and a display method for 3D data.

4. The output device for video data according to claim 3, wherein the preset video data is video data representing a video with a single color.

5. The output device for video data according to any one of claims 1 to 4, wherein the predetermined period is longer than a period required to complete switching of the type of the display method for video data after the external device receives input of video data of which type is different from a type of previously displayed video data.
